# EUROPEAN PATENT APPLICATION

(11) **EP 4 621 657 A1**
(43) Date of publication of application: **24.09.2025**
(21) Application number: 25163569.4
(22) Date of filing: 13.03.2025
(51) Int. Cl.: G06N 3/09, H04N 21/466, H04N 21/25, G06N 3/08, H04N 21/482, G06V 10/40, G06V 10/762, G06V 30/00, G10L 15/00

(54) **METHOD, APPARATUS, ELECTRONIC DEVICE AND PROGRAM PRODUCT FOR CROSS-TYPE RECOMMENDATION**

(30) Priority: 13.03.2024 CN 202410288974
(71) Applicant: BEIJING YOUZHUJU NETWORK TECHNOLOGY CO. LTD., Beijing 101299 (CN)
(72) Inventor: SU, Kai, Beijing, 100028 (CN); QIAN, Dongjun, Beijing, 100028 (CN); ZHOU, Wen, Beijing, 100028 (CN)
(74) Representative: Isarpatent

(57) **Abstract**

Embodiments of the present disclosure relate to a method (200), an apparatus (800), an electronic device (900), and a computer program product for cross-type recommendation. The method (200) includes determining (202) a first type of media content interacted with a user, and determining (204) a first media feature of the first type of media content. The method (200) further includes recommending (206) a second type of media content to the user based on the first media feature, wherein the first type of media content and the second type of media content belong to different types of media content and share a same feature space. According to the embodiments of the present disclosure, it can facilitate the use of the behavior signal of the user on the side of the first type of media content, and improve the accuracy of the recommendation and the satisfaction of the user.

## Description

### FIELD

The present disclosure generally relates to the field of computer technology, and more specifically, to a method, an apparatus, an electronic device and a program product for cross-type recommendation.

### BACKGROUND

At present, various media contents are developing rapidly. With the popularization and promotion of the mobile Internet, the viewing experience of typical media content such as short videos has been continuously improved, and the user group has also been continuously expanding. At the same time, short video platforms are constantly exploring new forms of content, such as short video social networking, to meet the diverse needs of users. As a new form of interactive media content, live streaming has also received more and more attention and pursuit. At the same time, with the development of technologies and the enrichment of live streaming content, application scenarios of live streaming are also expanding, such as game live streaming.

The same user may exhibit different behavior patterns in different scenarios. In a live streaming scenario, a user may watch live streaming and interact with a streamer in real time, and participate in commenting, liking, and other behaviors. In a short video scenario, a user may obtain information, entertainment, or social interaction by watching short video content. Short videos typically have characteristics of short and concise, and rich in content, and a user may quickly browse multiple videos in a short time, and may also perform operations such as liking, commenting, and sharing on a video that the user is interested in.

### SUMMARY

Embodiments of the present disclosure provide a method, an apparatus, an electronic device, and a program product for cross-type recommendation.

According to a first aspect of the present disclosure, a method for cross-type recommendation is provided. The method includes determining a first type media of content interacted with a user. The method further includes determining a first media feature of the first type of media content. In addition, the method further includes recommending a second type of media content to the user based on the first media feature, where the first type of media content and the second type of media content belong to different types of media content and share a same feature space.

In a second aspect of the present disclosure, an apparatus for cross-type recommendation is provided. The apparatus includes a first type of media content determining module configured to determine a first type of media content interacted with a user. The apparatus further includes a first media feature determining module configured to determine a first media feature of the first type of media content. In addition, the apparatus further includes a second type of media content recommending module configured to recommend a second type of media content to the user based on the first media feature, where the first type of media content and the second type of media content belong to different types of media content and share a same feature space.

In a third aspect of the present disclosure, an electronic device is provided. The electronic device includes a processor and a memory coupled to the processor, and the memory has instructions stored thereon, and the instructions, when executed by the processor, cause the electronic device to perform the method of the first aspect.

In a fourth aspect of the present disclosure, a computer program product is provided. the computer-readable storage medium has computer executable instructions stored thereon, wherein the computer executable instructions are executed by a processor to implement the method of the first aspect.

The summary is intended to introduce a selection of concepts in a simplified form, and they will be further described below in the detailed description. The summary is not intended to identify key features or essential features of the claimed subject matter, nor is it intended to limit the scope of the claimed subject matter.

### BRIEF DESCRIPTION OF THE DRAWINGS

The above and other features, advantages and aspects of various embodiments of the present disclosure will become more apparent in combination with the drawings and with reference to the following detailed description. In the drawings, the same or similar reference numerals denote the same or similar elements, where:
FIG. 1 shows a schematic diagram of an example environment in which some embodiments of the present disclosure may be implemented;
FIG. 2 shows a flowchart of a method for cross-type recommendation according to some embodiments of the present disclosure;
FIG. 3 shows a schematic flowchart of a process for training a content understanding model according to some embodiments of the present disclosure;
FIG. 4 shows a schematic diagram of joint training of a content understanding model based on short video labels, live streaming labels, and genre labels according to some embodiments of the present disclosure;
FIG. 5 shows a schematic diagram of training a content understanding model based on cross-type of user historical viewing according to some embodiments of the present disclosure;
FIG. 6 shows a flowchart of an application for implementing cross-type recommendation according to some embodiments of the present disclosure;
FIG. 7A shows a schematic diagram of a user interacting with a short video interface according to some embodiments of the present disclosure;
FIG. 7B shows a schematic diagram of recommending a live streaming interface to a user according to some embodiments of the present disclosure;
FIG. 7C shows a schematic diagram of an interface after a user subscribes to a recommended live streaming according to some embodiments of the present disclosure;
FIG. 8 shows a block diagram of an apparatus for cross-type recommendation according to some embodiments of the present disclosure; and
FIG. 9 shows a block diagram of an electronic device according to some embodiments of the present disclosure.

Throughout the drawings, the same or similar reference numerals refer to the same or similar elements.

### DETAILED DESCRIPTION OF EMBODIMENTS

It can be understood that data involved in this technical solution (including but not limited to the data itself, the acquisition or use of data) should comply with the requirements of corresponding laws, regulations and relevant provisions.

It can be understood that before using the technical solutions disclosed in the embodiments of the present disclosure, the user should be informed of the type, scope of use, use scenarios, etc. of the personal information involved in the present disclosure in an appropriate manner in accordance with relevant laws, regulations, and the user's authorization should be obtained.

For example, when an active request from a user is received, prompt information is sent to the user to explicitly inform the user that the operation requested to be performed will require an acquisition and a use of the user's personal information. Thereby, the user can independently choose whether to provide personal information to software or hardware such as an electronic device, an application, a server or a storage medium that performs the operations of the technical solutions of the present disclosure according to the prompt information.

As an optional but non-limiting implementation, a manner of sending prompt information to the user in response to receiving an active request from the user may be, for example, a pop-up window, and the prompt information may be presented in text in the pop-up window. In addition, the pop-up window may also carry a selection control for the user to choose whether to "agree" or "disagree" to provide personal information to the electronic device.

It can be understood that the above process of notifying and acquiring user authorization is only illustrative, and does not limit the implementation of the present disclosure, and other methods that meet relevant laws and regulations may also be applied to the implementations of the present disclosure.

Embodiments of the present disclosure will be described in more detail below with reference to the drawings. Although some embodiments of the present disclosure are shown in the drawings, it should be understood that the present disclosure may be implemented in various forms and should not be interpreted as being limited to the embodiments set forth herein, on the contrary, these embodiments are provided for a more thorough and complete understanding of the present disclosure. It should be understood that the drawings and embodiments of the present disclosure are only for exemplary purposes, and are not intended to limit the protection scope of the present disclosure.

In the description of the embodiments of the present disclosure, the term "include/include" and similar terms should be understood as open-ended inclusions, that is, "include/include but not limited to". The term "based on" should be understood as "at least partially based on". The term "an embodiment" or "the embodiment" should be understood as "at least one embodiment". The term "first", "second", etc. may refer to different or same objects, unless explicitly stated. The following may also include other explicit and implicit definitions.

Traditionally, a recommendation algorithm for one type of media content mainly depends on the characteristics of this type of media content. In the construction process of these recommendation algorithms, an important data source (i.e., the user behavior signal on the side of other types of media content) is often ignored. Taking the live streaming recommendation as an example, the live streaming recommendation algorithm typically depends on the characteristics of the live streaming itself (such as interactive data in the live streaming room, the live streaming duration, etc.) to perform the recommendation calculation. This algorithm for live streaming recommendation often ignores the characteristics of other types of media content. For example, the user behavior signal on the side of short videos is ignored in the live streaming recommendation algorithm. Without the user behavior signal on the side of short videos, the live streaming recommendation algorithm will face some limitations and challenges. For example, it is impossible to make more accurate personalized recommendations for users, and it is impossible to make accurate recommendations for new users of live streaming, making it difficult for users to find content that interests them. In addition, recommendation algorithms for different types of media content are in different spaces. For example, the recommendation of live streaming and the recommendation of short videos are separated.

In the embodiments of the present disclosure, the first type of media content and the second type of media content are mapped to the same feature space, and the second type of media content related to the first type of media content is recommended to the user. This method for cross-type recommendation can help make full use of the user behavior signal on the side of the first type of media content in the recommendation of the second type of media content, and can recommend more personalized other-type media content to the user, while improving the accuracy of the recommendation and the satisfaction of the user.

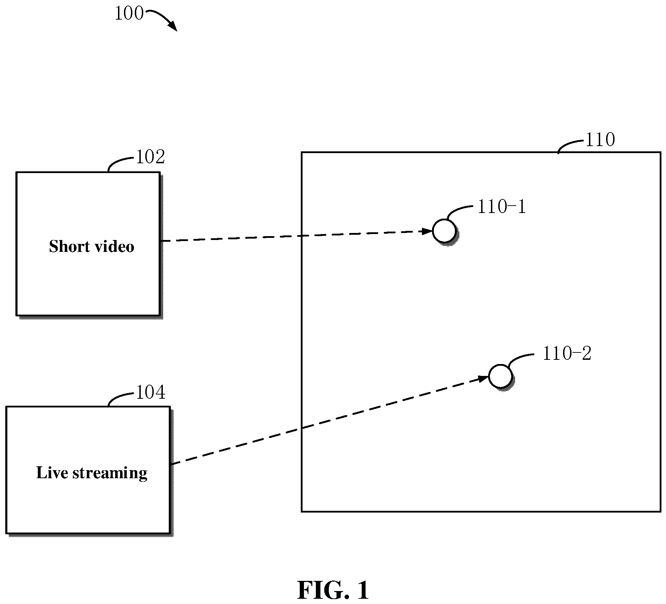

FIG. 1 shows a schematic diagram of an example environment 100 in which some embodiments of the present disclosure may be implemented. The schematic diagram of the example environment 100 is only for illustrative purposes, and is not intended to limit the present disclosure. As shown in FIG. 1, different types of media spaces share the same feature space. The short video 102 and the live streaming 104 are different types of media content, but they share the same feature space 110.

In some embodiments, the short video and the live streaming are converted into the same feature space by the joint encoder. For example, the short video 102 is converted into the feature space 110 by the joint encoder to obtain a feature 110-1. Similarly, the live streaming 104 is also converted into the feature space 110 by the joint encoder to obtain a feature 110-2. In some embodiments, the initial feature of the short video and the live streaming may be pre-extracted. In some embodiments, the initial features of the short video are the picture feature, the speech recognition feature, and the character recognition feature of the short video. In some embodiments, the initial features of the live streaming are the picture feature, the speech recognition feature, and the character recognition feature of the live stream.

In some embodiments, the content understanding model is used to cluster the associated short video features and live streaming features in the feature space 110 into a category. In some embodiments, the live streaming content is recommended to the user according to the short videos aggregated into one category in the same feature space. In some embodiments, the content understanding model may cluster the live streaming content associated with the short videos together, for example, cluster the live streaming and the short video with the same or similar live streaming labels and the short video labels into one category.

In the embodiments of the present disclosure, the short video and the live streaming are converted into the same feature space, such that the live streaming content associated with the short video may be recommended to the user based on the short video. According to this method, the user behavior signal on the side of short videos may be added in the process of live streaming recommendation, such that the live streaming content may be accurately recommended to the user, and the experience and satisfaction of the user can be improved.

It should be understood that the architecture and functions in the example environment 100 are described for exemplary purposes only, without implying any limitation to the scope of the present disclosure. The embodiments of the present disclosure may also be applied to other environments with different structures and/or functions.

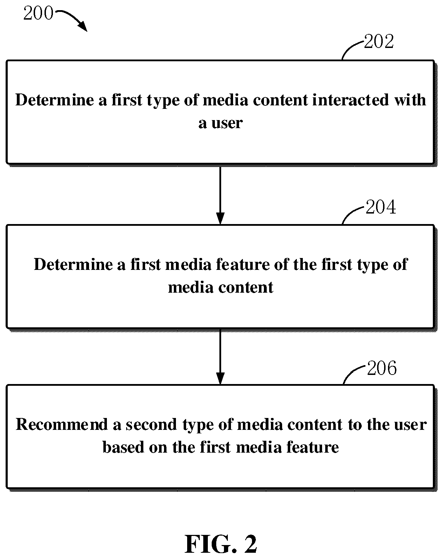

The process according to the embodiments of the present disclosure will be described in detail below in combination with FIG. 2 to FIG. 9. For ease of understanding, specific data mentioned in the following description is an example and is not intended to limit the protection scope of the present disclosure. It can be understood that the embodiments described below may also include additional actions not shown and/or the shown actions may be omitted, and the scope of the present disclosure is not limited in this respect.

FIG. 2 shows a flowchart of a method 200 for cross-type recommendation according to some embodiments of the present disclosure. At block 202, a first type of media content interacted with a user is determined. In some embodiments, the first type of media content interacted with the user may be a short video. In some embodiments, the interaction behaviors with the short video may be operations of the user on the short video such as watching, liking, commenting, sharing, and saving. These behaviors reflect the user's interest, preference, attitude, and feedback on the short video content.

At block 204, a first media feature of the first type of media content is determined. In some embodiments, the first type of media content is a short video. In some embodiments, the first feature of the first type of media content is determined by a model, for example, the first feature of the first type of media content may be determined by a content understanding model, for example, the feature may be the feature 110-1 in the feature space shown in FIG. 1.

At block 206, a second type of media content is recommended to the user based on the first media feature. In some embodiments, the first type of media and the second type of media content are media contents of different genres. In some embodiments, the first type of media content is a short video, and the second type of media content is a live streaming. In some embodiments, the short video and the live streaming are converted into the same feature vector space. In some embodiments, the live streaming is recommended to the user according to the correlation between the live streaming and the short video. In some embodiments, the interaction behaviors of the user and the live streaming mainly include watching the live streaming, participating in commenting, liking, giving gifts, sharing, and paying attention to the streamer, etc.

By determining a first type of media content (i.e., a short video) interacted with a user and a feature of the short video, and recommending a second type of media content (i.e., a live stream) related to the short video to the user based on the feature of the short video in the same feature space, the user behavior signal on the side of short videos is added in the process of recommending the live streaming to the user, such that diverse media content that users like can be pushed to them more accurately, and the users can easily find content that is in line with their preferences, thereby significantly improving the satisfaction and experience of the users.

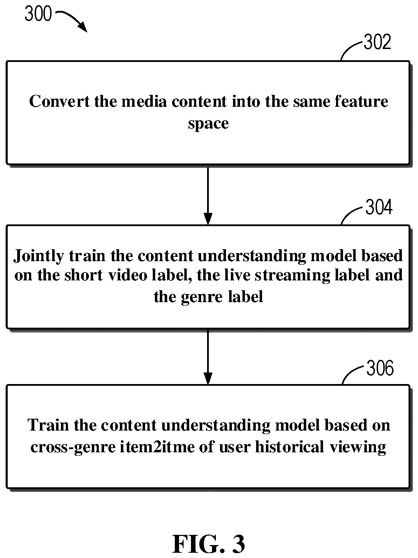

FIG. 3 shows a schematic flowchart of a process 300 for training a content understanding model according to some embodiments of the present disclosure. As shown in FIG. 3, at 302, the media content is converted into the same feature space. In some embodiments, the training data, (i.e., the short video data and the live streaming data for training the content understanding model) is converted into the same feature space. In some embodiments, the initial feature of the short video data is extracted, the initial feature of the short video data including the picture feature, the speech feature, and the character feature of the short video, and the initial feature of the short video data is converted into a feature space through the joint encoder. In some embodiments, the initial feature of the live streaming data is extracted, the initial feature of the live streaming data including the picture feature, the speech feature, and the character feature of the live stream, and the initial feature of the live streaming data is converted into the same feature space as the short video through the joint encoder.

Referring to FIG. 3, at 304, the content understanding model is jointly trained based on the short video label, the live streaming label, and the genre label. In some embodiments, the short video label may be a label such as "travel", "yummy", and "science and technology", and these short video labels are used to describe or classify the content of the short video. In some embodiments, the live streaming label may be a label such as "daily", " outfits", and "science and technology", and these live streaming labels are used to describe or classify the content of the live stream. In some embodiments, the live streaming label and the short video label may be repeated. In some embodiments, the live streaming label and the short video label with the same content may be different or at least partially different. For example, the live streaming label is "food" while the short video label is "yummy". In some embodiments, the genre label refers to the type of the media content, that is, whether it is a short video or a live stream.

In some embodiments, the content understanding model is trained based on a large amount of short video data labeled with short video labels, so that the content understanding model can output a real short video label of the short video. In some embodiments, the content understanding model is trained based on a large amount of live streaming data labeled with live streaming labels, so that the content understanding model can output a real live streaming label of the live streaming content. In some embodiments, the content understanding model is trained based on a large amount of media content (i.e., short video content or live streaming content), labeled with genre labels, so that the content understanding model can output a real genre label of the media content. In some embodiments, the training method for short video labels, the training method for live streaming labels, and the training method for genre labels are performed in turn.

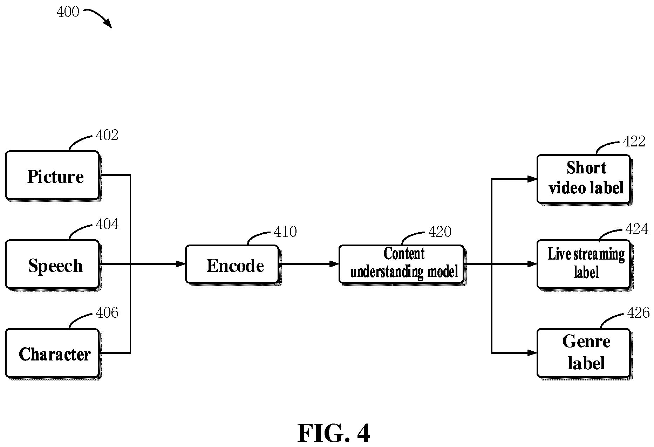

Referring to FIG. 4, in some embodiments, a large amount of live streaming data labeled with live streaming labels is input into the content understanding model 420 to obtain a generated live streaming label 424, and a parameter of the content understanding model 420 is adjusted according to a loss between the generated live streaming label 424 and the labeled live streaming label. In some embodiments, when the difference between the generated live streaming label and the labeled live streaming label is large, that is, the loss value is high, the parameter of the content understanding model 420 is adjusted to generate a more accurate live streaming label 424 in the next iteration. For example, first, the live streaming data labeled with live streaming labels is input into the content understanding model. The content understanding model analyzes the input data according to its current parameters and generates a corresponding live streaming label. Next, it is necessary to calculate the difference between the label generated by the content understanding model and the real labeled label. After the loss is calculated, the backpropagation algorithm starts to work. It starts from the output layer of the content understanding model and calculates the gradient of the loss function to each parameter according to the chain rule. By calculating the gradient, we can know how to adjust the parameters to minimize the loss function. After obtaining the gradient, an optimization algorithm (such as stochastic gradient descent, etc.) can be used to update the parameters of the content understanding model. This process will be repeated until the difference between the live streaming label output by the content understanding model and the real live streaming label reaches an acceptable level or a predetermined number of times.

Continuing to refer to FIG. 3, at 306, the content understanding model is trained based on the cross-genre of user historical viewing. In some embodiments, short video data and live streaming data are selected from records of interaction with the user. In some embodiments, a positive sample combination is formed by a plurality of short videos that recently interacted with the user and live streaming data associated with the plurality of short videos, and a negative sample combination is formed by the live streaming data associated with the plurality of short videos and a further plurality of short video data. The short video data in these negative sample combinations may be data of other users or short video data irrelevant to the selected plurality of short videos. In some embodiments, the content understanding model is trained based on the positive sample combination and the negative sample combination, so that the content understanding model can learn the high similarity of the media content in the positive sample combination and the low similarity of the media content in the negative sample combination.

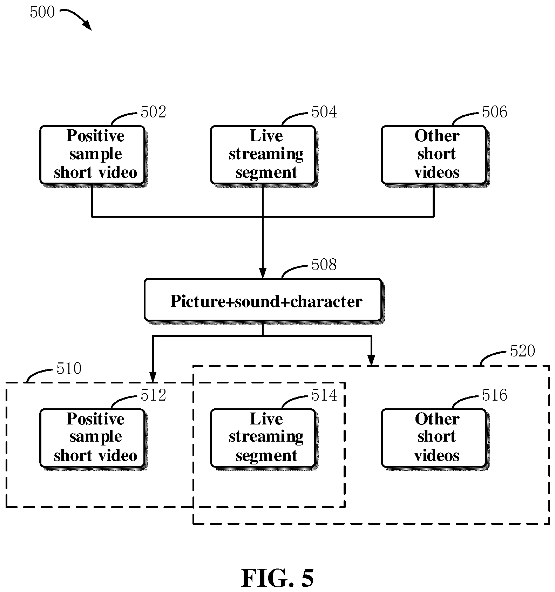

Referring to FIG. 5, the content understanding model is trained using the positive sample short video 502 and the live streaming segment 504 associated with the positive sample short video, so that the content understanding model can learn the high similarity between the positive sample short video 502 and the live streaming segment 504, so that a positive sample combination 510 with high similarity can be generated, that is, the similarity between the positive sample short video vector 512 and the live streaming segment vector 514 is high.

FIG. 4 shows a schematic diagram of joint training of a content understanding model based on short video labels, live streaming labels, and genre labels according to some embodiments of the present disclosure. That is, as shown at 304 in FIG. 3. Referring to FIG. 4, the picture 402, speech 404, and characters 406 of the short video and the live streaming are encoded through the encoder 410 and input into the content understanding model 420 to obtain the short video label 422, the live streaming label 424, and the genre label 426, and the output result is iteratively repeated until the live streaming label, short video label, and genre label output by the content understanding model tend to be real. In some embodiments, the short video label may be a label such as "travel", "yummy", and "science and technology", and these short video labels are used to describe or classify the content of the short video. In some embodiments, the live streaming label may be a label such as "daily", "outfits", and "science and technology", and these live streaming labels are used to describe or classify the content of the live stream. In some embodiments, the live streaming label and the short video label may be repeated. In some embodiments, the live streaming label and the short video label with the same content may be different. For example, the live streaming label is "food" while the short video label is "yummy". In some embodiments, the genre label refers to the type of the media content, that is, whether it is a short video or a live stream.

Referring to FIG. 4, for example, the picture feature 402 of the short video data, the speech feature 404 of the short video, and the character feature 406 of the short video are extracted, and the initial feature of the short video data is converted into a feature space through the joint encoder 410. Similarly, the picture feature 402 of the live streaming data, the speech feature 404 of the live stream, and the character feature 406 of the live streaming are extracted, and the initial feature of the live streaming data is converted into the same feature space as the short video by the joint encoder 420. In some embodiments, these features converted into the same feature space are input into the content understanding model to train the content understanding model.

Referring to FIG. 4, in some embodiments, a plurality of short video data labeled with short video labels are input into the content understanding model to obtain an automatically generated short video label, and the parameter of the content understanding model is adjusted according to a loss between the generated short video label and the labeled short video label. In some embodiments, when the difference between the generated short video label and the labeled short video label is large, the loss value will be high. In order to reduce this difference, the parameter of the content understanding model is adjusted to generate a more accurate short video label in the next iteration. For example, first, the short video data labeled with short video labels is input into the content understanding model. The model analyzes the input data according to its current parameters and generates a corresponding short video label. Next, it is required to calculate the difference between the label generated by the content understanding model and the real labeled label. After the loss is calculated, the backpropagation algorithm starts to work. It starts from the output layer of the content understanding model and calculates the gradient of the loss function to each parameter according to the chain rule. By calculating the gradient, how to adjust the parameters to minimize the loss function can be known. After obtaining the gradient, an optimization algorithm (such as stochastic gradient descent, etc.) can be used to update the parameters of the content understanding model. This process will be repeated until the difference between the short video label output by the content understanding model and the real short video label reaches an acceptable level or a predetermined number of times. For example, the input short video content has a short video label of "daily", and the short video content output by the model has a short video label of "travel", and whether the loss between input and output is at an acceptable level is compared. Otherwise, the parameter of the content understanding model needs to be adjusted until an accurate output of "daily" is obtained. For another example, after several iterations, the input short video content has a short video label of "daily", and the short video content output by the model has a short video label of "daily", that is, after the loss between the output short video label and the labeled short video label converges, the training of the content understanding model on short video labels may be completed.

Referring to FIG. 4, in some embodiments, a large amount of live streaming data labeled with live streaming labels is input into the content understanding model to obtain a generated live streaming label, and a parameter of the content understanding model is adjusted according to a loss between the generated live streaming label and the labeled live streaming label. In some embodiments, when the difference between the generated live streaming label and the labeled live streaming label is large, that is, the loss value is high, the parameter of the content understanding model is adjusted to generate a more accurate live streaming label of the live streaming data in the next iteration. This process will be repeated until the difference between the live streaming label output by the content understanding model and the real live streaming label reaches an acceptable level or a predetermined number of times.

Continuing referring to FIG. 4, in some embodiments, a large amount of media data labeled with genre labels is input into the content understanding model to obtain a generated genre label, and a parameter of the content understanding model is adjusted according to a loss between the generated genre label and the labeled genre label. In some embodiments, when the difference between the generated genre label and the labeled genre label is large, that is, the loss value is high, the parameter of the content understanding model is adjusted to generate a genre label with more accurate genre label in the next iteration. This process will be repeated until the difference between the genre label output by the content understanding model and the real genre label reaches an acceptable level or a predetermined number of times. In some embodiments, the training method for short video labels, the training method for live streaming labels, and the training method for genre labels are performed in turn.

According to the method of jointly and iteratively training the content understanding model based on the short video label, the live streaming label, and the genre label, the content understanding model can learn the associations and differences between these different labels well, thereby improving the ability to generate accurate labels for each kind of media content.

FIG. 5 shows a schematic diagram of a process 500 for training a content understanding model based on cross-type of user historical viewing according to some embodiments of the present disclosure. That is, as shown at 306 in FIG. 3. Referring to FIG. 5, the content understanding model is trained using the positive sample short video 502 and the live streaming segment 504 associated with the positive sample short video, so that the content understanding model can learn the high similarity between the positive sample short video 502 and the live streaming segment 504, so that a positive sample combination 510 with high similarity can be generated, that is, the similarity between the positive sample short video vector 512 and the live streaming segment vector 514 is high. In some embodiments, the picture feature, the sound feature, and the character feature of the positive sample short video 502 and the live streaming segment 504 are converted into feature vectors in the same space through the joint encoder, so as to facilitate the content understanding model to better understand the correlation between the positive sample short video and the live streaming segment.

Referring to FIG. 5, in some embodiments, a large amount of positive sample combination data is input into the content understanding model to generate a feature vector pair of the positive sample combination, the similarity between the generated vector pair of the positive sample combination is calculated, and the parameter of the content understanding model is adjusted according to the calculated similarity. In some embodiments, the similarity of the positive sample combination is as high as possible. In some embodiments, when the loss of the calculated similarity between positive samples is large, that is, the difference from the real similarity is large, the parameter of the content understanding model is adjusted to enable the content understanding model to correctly learn the highly similar relationship between the short video and the live streaming in the positive sample combination in the next iteration.

For example, first, the model receives a positive sample combination (a positive sample short video and a live streaming segment) as input, performs forward propagation through layers of networks, and generates a corresponding output. In this process, the parameters (such as weights and biases) of the model remain unchanged. The content understanding model calculates a loss function according to the output and the expected target (here it is hoped that the two feature vectors are similar). The loss function measures the difference between the current prediction of the model and the real target. Next, a backpropagation process is performed. Starting from the output layer of the model, the backpropagation algorithm calculates the gradient of the loss function to the parameters of the model. This process is performed layer by layer according to the chain rule until the input layer of the model is reached. After obtaining the gradient, the model uses an optimization algorithm (such as gradient descent, etc.) to update the parameters. By iteratively repeating this process, the content understanding model gradually can learn how to better fit the training data. In some embodiments, the loss function of the content understanding model is typically designed to make the similarity between positive sample pairs as high as possible, while the similarity between negative sample pairs as low as possible.

Referring to FIG. 5, the content understanding model is trained using the live streaming segment 504 and other short videos 506, so that the content understanding model can learn the low similarity between the other short videos 506 and the live streaming segment 504, so that a negative sample combination 520 with low similarity can be generated, that is, the similarity between the other video vector 516 and the live streaming segment vector 514 is low. In some embodiments, the picture feature, the sound feature, and the character feature of the other short videos 506 and the live streaming segment 504 are converted into feature vectors in the same space through the joint encoder, so as to facilitate the content understanding model to better understand the correlation between the negative sample short video and the live streaming segment.

Referring to FIG. 5, in some embodiments, a large amount of negative sample combination data is input into the content understanding model to generate a feature vector pair of the negative sample combination, the similarity between the generated vector pair of the negative sample combination is calculated, and the parameter of the content understanding model is adjusted according to the calculated similarity. In some embodiments, the similarity of the negative sample combination is as low as possible. In some embodiments, when the loss of the calculated similarity between negative samples is large, that is, the difference from the real similarity is large, the parameter of the content understanding model is adjusted to enable the content understanding model to correctly learn the lowly similar relationship between the other short video and the live streaming segment in the negative sample combination in the next iteration.

In some embodiments, short video data and live streaming data are selected from records of interaction with the user. In some embodiments, a positive sample combination is formed by a plurality of short videos that recently interacted with the user and live streaming data associated with the plurality of short videos, and a negative sample combination is formed by the live streaming data associated with the plurality of short videos and other plurality of short video data. The short video data in these negative sample combinations may be data of other users or short video data irrelevant to the selected plurality of short videos. For example, a plurality of short videos with relevance and live streaming segments associated with the plurality of short videos with relevance are selected from records of interaction with the user to form five positive sample combinations, and the content understanding model is trained using a negative sample combination formed by the plurality of live streaming segments and other irrelevant short videos, so that the content understanding model can distinguish between content associated with the short video in the positive sample combination and content not associated with the short video in the positive sample combination.

According to this method, the content understanding model can learn how to accurately represent the short video feature and the live streaming feature in the feature space. In this way, when a new live streaming segment or short video is given, the model can generate a corresponding feature vector in the same space and compare similarity with other media content, thereby providing personalized recommendations for users.

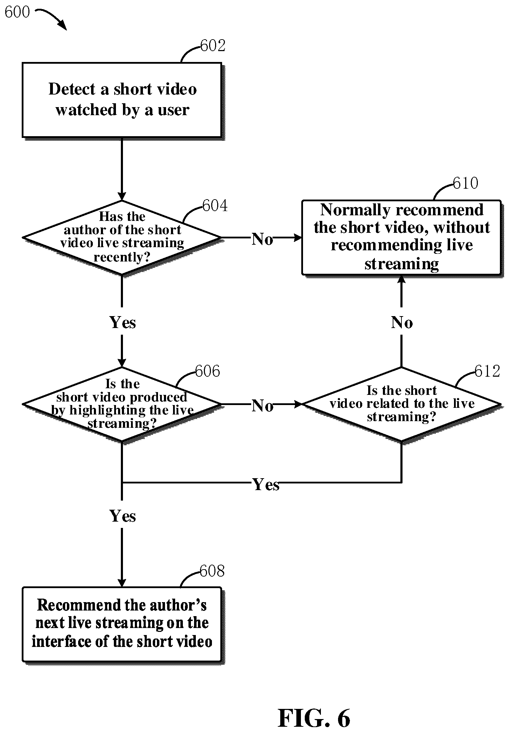

FIG. 6 shows a flowchart of an application 600 for implementing cross-type recommendation according to some embodiments of the present disclosure. Referring to FIG. 6, at 602, a short video watched by a user is detected. In some embodiments, when it is detected that a user is watching a short video, an author of the short video being watched by the user may be determined.

Referring to FIG. 6, at 604, it is determined whether the author of the short video has recently performed on live streaming. If the author of the short video has not performed on the live streaming, at 610, a short video is normally recommended to the user without recommending live streaming content.

Continuing referring to FIG. 6, at 604, it is determined whether the author of the short video has recently performed on live streaming. If the author of the short video has recently performed on live streaming, at 606, it is determined whether the short video is a live streaming segment or a highlight segment that the author has previously performed on live streaming. If the short video being watched by the user is a live streaming segment or a highlight segment that the author has previously performed on live streaming, at 608, a next live streaming of the author is recommended on an interface of the short video being watched by the user. For example, a subscribe button of "remind me of the next live streaming" may be displayed on the page of the short video.

Continuing referring to FIG. 6, at 604, it is determined whether the author of the short video has recently performed live streaming. If the author of the short video has recently performed on live streaming, at 606, it is determined whether the short video is a live streaming segment or a highlight segment that the author has previously performed on live streaming. If the short video being watched by the user is not a live streaming segment or a highlight segment that the author has previously performed on live streaming, then at 612, it is determined whether the short video is related to a live streaming that the author has previously performed on live streaming, and if it is not related, at 610, a short video is normally recommended to the user without recommending live streaming. If the short video is related to the live streaming that the author has previously performed on live streaming, at 608, the next live streaming of the author is recommended on the interface of the short video being watched by the user. For example, a subscribe button of "remind me of the next live stream" is displayed on the page of the short video.

In some embodiments, a short video feature vector is extracted for each short video posted by the author, and then it is determined whether the author has performed on live streaming in the last N days, for example, in the last five days. For example, if the author has performed on live streaming for six times in the last five days, live streaming feature vectors of the six live streaming are extracted. The short video feature vector and the live streaming feature vector are feature vectors in the same space, and a similarity between the short video feature vector and the live streaming feature vector is calculated. When the similarity exceeds a predetermined similarity condition, for example, the similarity is five, the next live streaming content of the author is recommended on the display interface of the short video of the author.

By displaying the live streaming recommendation icon matching the browsing interests of the user on the short video interface browsed by the user, diverse media content that users like can be pushed to them more accurately, and the users can easily find content that is in line with their preferences, thereby significantly improving the satisfaction and experience of the users.

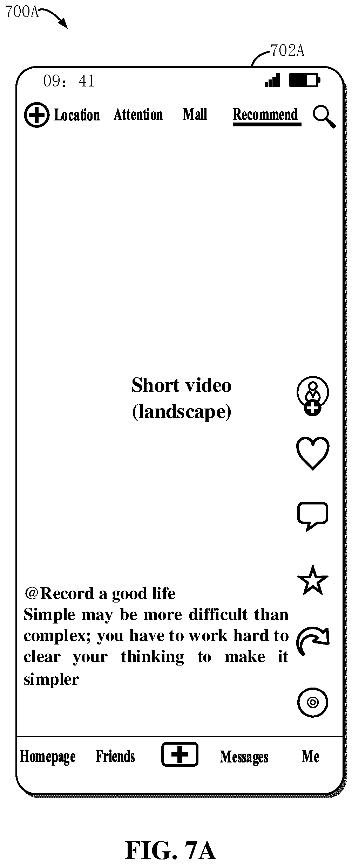

FIG. 7A shows a schematic diagram 700A of a user interacting with a short video interface according to some embodiments of the present disclosure. Referring to FIG. 7A, the user is browsing the display page 702A, and a short video (landscape) that the user is staying to watch is displayed on the page 702A, which short video (landscape) is created by the author "@ record a good life". In some embodiments, on the page 702A, the user may perform operations on the short video such as watching, liking, sharing, saving, and reporting.

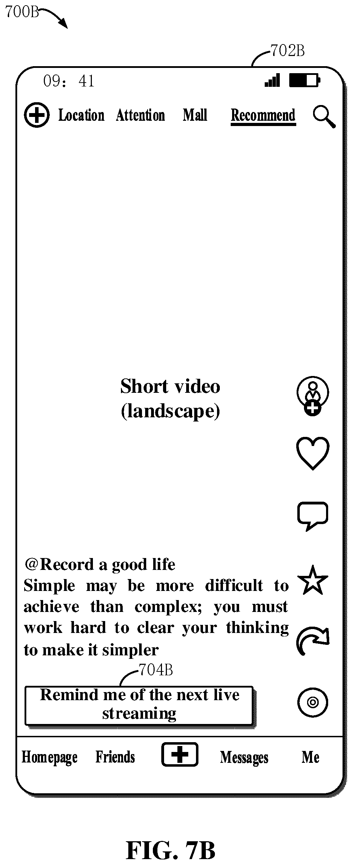

FIG. 7B shows a schematic diagram 700B of recommending a live streaming interface to a user according to some embodiments of the present disclosure. Referring to FIG. 7B, a short video (landscape) that the user is staying to watch is displayed on the page 702B, which short video (landscape) is created by the author "@ record a good life". A live streaming recommendation label 704B is displayed on the display page 702B.

In some embodiments, if the creator of the short video being watched by the user has previously performed on live streaming, and the short video being watched by the user is a highlight output live streaming performed by the creator of the short video previously, a live streaming recommendation label will be displayed on the page of the short video being watched by the user. In some embodiments, if the creator of the short video being watched by the user has previously performed on live streaming, and the short video being watched by the user is related to the live streaming content previously performed on live streaming by the creator, a live streaming recommendation label will be displayed on the page of the short video being watched by the user.

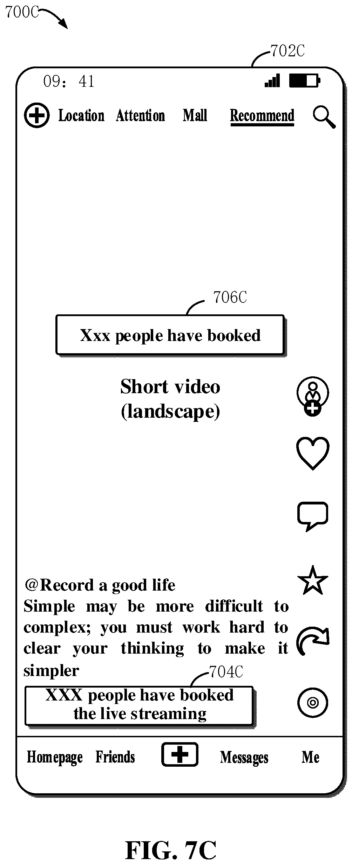

FIG. 7C shows a schematic diagram of an interface 700C after a user subscribes to a recommended live streaming according to some embodiments of the present disclosure. Referring to FIG. 7C, the display interface 702C displays that the user has subscribed to the live streaming content. In FIG. 7B, when the user clicks on "remind me of the next live stream" 704B, "XXX people have already booked the live stream" 704C and "XXX people have booked" 706C will be displayed in FIG. 7C.

By displaying the live streaming recommendation icon matching the user's interests on the short video page watched by the user, different types of media content that users like can be recommended to them more accurately, and the users can easily find content that is in line with their preferences, thereby improving the satisfaction of the users.

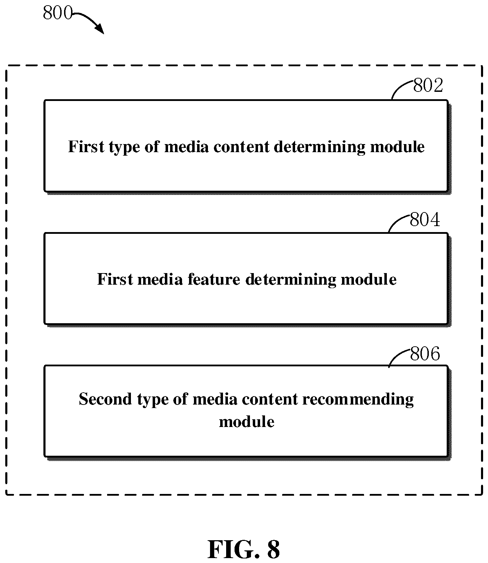

FIG. 8 shows a block diagram of an apparatus 800 for cross-type recommendation according to some embodiments of the present disclosure. As shown in FIG. 8, the apparatus 800 includes a first type of media content determining module 802 configured to determine a first type of media content interacted with a user. The apparatus 800 further includes a first media feature determining module 804 configured to determine a first media feature of the first type of media content. The apparatus 800 further includes a second type of media content recommending module 806 configured to recommend a second type of media content to a user based on the first media feature, where the first type of media content and the second type of media content belong to different types of media content and share a same feature space.

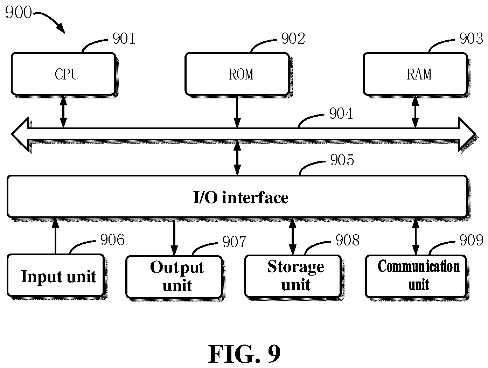

FIG. 9 shows a block diagram of an electronic device 900 according to some embodiments of the present disclosure, and the device 900 may be the device or apparatus described in the embodiments of the present disclosure. As shown in FIG. 6, the device 900 includes a central processing unit (CPU) and/or a graphics processing unit (GPU) 901, which may perform a variety of appropriate actions and processes according to computer program instructions stored in a read-only memory (ROM) 902 or computer program instructions loaded from a storage unit 908 into a random-access memory (RAM) 903. Various programs and data required for the operation of the device 900 may also be stored in the RAM 903. The CPU/GPU 901, ROM 902, and RAM 903 are connected to each other through a bus 908. An input/output (I/O) interface 905 is also connected to the bus 904. Although not shown in FIG. 9, the device 900 may also include a co-processor.

A plurality of components in the device 900 are connected to the I/O interface 905, including: an input unit 906, such as a keyboard, a mouse, etc.; an output unit 907, such as various types of displays, speakers, etc.; a storage unit 908, such as a magnetic disk, an optical disk, etc.; and a communication unit 909, such as a network card, a modem, a wireless communication transceiver, etc. The communication unit 909 allows the device 900 to exchange information/data with other devices through computer networks such as the Internet and/or various telecommunication networks.

The various methods or processes described above may be executed by the CPU/GPU 901. For example, in some embodiments, the method may be implemented as a computer software program, which is tangibly contained in a machine-readable medium, such as the storage unit 908. In some embodiments, part or all of the computer program may be loaded and/or installed onto the device 900 via the ROM 902 and/or the communication unit 909. When the computer program is loaded into the RAM 903 and executed by the CPU/GPU 901, one or more steps or actions in the method or process described above may be performed.

In some embodiments, the method and process described above may be implemented as a computer program product. The computer program product may include a computer-readable storage medium having computer-readable program instructions loaded thereon for performing various aspects of the present disclosure.

The computer-readable storage medium may be a tangible device that can hold and store instructions used by the instruction execution device. The computer-readable storage medium may be, for example, but not limited to, an electrical storage device, a magnetic storage device, an optical storage device, an electromagnetic storage device, a semiconductor storage device, or any suitable combination thereof. More specific examples (non-exhaustive list) of the computer-readable storage medium include: portable computer disk, hard disk, random access memory (RAM), read-only memory (ROM), erasable programmable read-only memory (EPROM or flash memory), static random access memory (SRAM), portable compact disk read-only memory (CD-ROM), digital versatile disk (DVD), memory stick, floppy disk, mechanical encoding device, such as punched card or groove and bulge structure having instructions stored thereon, and any suitable combination thereof. The computer-readable storage medium used here is not interpreted as the instantaneous signal itself, such as radio waves or other freely propagating electromagnetic waves, electromagnetic waves propagating through waveguides or other transmission media (for example, light pulses through fiber optic cables), or electrical signals transmitted through wires.

The computer-readable program instructions described herein may be downloaded from a computer-readable storage medium to various computing/processing devices or downloaded to an external computer or an external storage device via a network such as the Internet, a local area network, a wide area network, and/or a wireless network. The network may include copper transmission cables, optical fiber transmission, wireless transmission, routers, firewalls, switches, gateway computers, and/or edge servers. The network adapter card or network interface in each computing/processing device receives computer-readable program instructions from the network and forwards the computer-readable program instructions for storage in the computer-readable storage medium in the respective computing/processing device.

The computer program instructions for performing the operations of the present disclosure may be assembly instructions, instruction set architecture (ISA) instructions, machine instructions, machine-related instructions, microcode, firmware instructions, state setting data, or source code or target code written in any combination of one or more programming languages, including object-oriented programming languages and conventional procedural programming languages. The computer-readable program instructions may be executed entirely on a user's computer, partly on a user's computer, as a stand-alone software package, partly on a user's computer and partly on a remote computer, or entirely on a remote computer or a server. In the case of involving a remote computer, the remote computer may be connected to a user's computer through any kind of network, including a local area network (LAN) or a wide area network (WAN), or may be connected to an external computer (for example, via the Internet through an Internet service provider). In some embodiments, an electronic circuit such as a programmable logic circuit, a field programmable gate array (FPGA), or a programmable logic array (PLA) is customized by using state information of the computer-readable program instructions, which may execute the computer-readable program instructions, thereby implementing various aspects of the present disclosure.

These computer-readable program instructions may be provided to a processing unit of a general-purpose computer, a special-purpose computer, or other programmable data processing apparatus, so as to produce a machine, such that the instructions, when executed by the processing unit of the computer or other programmable data processing apparatus, produce an apparatus for implementing the functions/acts specified in one or more blocks in the flowcharts and/or block diagrams. These computer-readable program instructions may also be stored in a computer-readable storage medium. These instructions cause the computer, the programmable data processing apparatus, and/or other devices to work in a specific way, so that the computer-readable medium having instructions stored thereon includes an article of manufacture, which includes instructions for implementing various aspects of the functions/acts specified in one or more blocks in the flowcharts and/or block diagrams.

These computer-readable program instructions may also be loaded onto a computer, other programmable data processing apparatus, or other device, so that a series of operational steps are performed on the computer, other programmable data processing apparatus, or other device to produce a computer-implemented process, so that the instructions executed on the computer, other programmable data processing apparatus, or other device implement the functions/acts specified in one or more blocks in the flowcharts and/or block diagrams.

The flowcharts and block diagrams in the drawings show the architecture, functions and operations of possible implementations of the device, method and computer program product according to multiple embodiments of the present disclosure. In this regard, each block in the flowcharts or block diagrams may represent a module, a program segment, or a portion of an instruction, and the module, program segment, or portion of an instruction contains one or more executable instructions for implementing specified logical functions. In some alternative implementations, the functions marked in the blocks may also occur in a different order than those marked in the drawings. For example, two consecutive blocks may actually be executed substantially in parallel, and they may sometimes be executed in a reverse order, depending on the functions involved. It should also be noted that each block in the block diagrams and/or flowcharts, and a combination of blocks in the block diagrams and/or flowcharts, may be implemented by a dedicated hardware-based system that performs specified functions or acts, or may be implemented by a combination of dedicated hardware and computer instructions.

The embodiments of the present disclosure have been described above, and the above description is exemplary, not exhaustive, and is not limited to the disclosed embodiments. Many modifications and changes will be apparent to those of ordinary skill in the art without departing from the scope and spirit of the described embodiments. The selection of terms used herein is intended to best explain the principles, practical applications, or technical improvements to the technology in the market of the embodiments, or to enable other ordinary skilled in the art to understand the embodiments disclosed herein.

Some example implementations of the present disclosure are listed below.

Example 1. A method for cross-type recommendation, including:
determining a first type of media content interacted with a user;
determining a first media feature of the first type of media content; and
recommending a second type of media content to the user based on the first media feature, wherein the first type of media content and the second type of media content belong to different types of media content and share a same feature space.

Example 2. The method of Example 1, wherein the first type of media content is a video, and the second type of media content is a live streaming, and initial features of the first type of media content and the second type of media content are converted into the same feature space by a joint encoder, and the initial features include at least one of a picture feature, a speech recognition feature, or a character recognition feature.

Example 3. The method of Example 1 or 2, wherein determining the first media feature of the first type of media content comprises:
determining the first media feature of the first type of media content by a content understanding model.

Example 4. The method of any one of Examples 1-3, further including at least one of:
training the content understanding model based on a plurality of first type of media content labeled with video labels;
training the content understanding model based on a plurality of second type of media content labeled with live streaming labels; or
training the content understanding model based on a first type of media content labeled with a video genre label and a second type of media content labeled with a live streaming genre label.

Example 5. The method of any of Examples 1-4, wherein training the content understanding model based on the plurality of first type of media content labeled with the video labels includes:
inputting a first type of training media content labeled with a video label into the content understanding model;
generating a video label of the first type of training media content; and
adjusting a parameter of the content understanding model based on the generated video label and the labeled video label.

Example 6. The method of any of Examples 1-5, wherein training the content understanding model based on the plurality of second type of media content labeled with the live streaming labels includes:
inputting a second type of training media content labeled with a live streaming label into the content understanding model;
generating a live streaming label of the second type of training media content; and
adjusting a parameter of the content understanding model based on the generated live streaming label and the labeled live streaming label.

Example 7. The method of any of Examples 1-6, wherein training the content understanding model based on the first type of media content labeled with the video genre label and the second type of media content labeled with the live streaming genre label includes:
inputting a plurality of training media contents labeled with genre labels into the content understanding model;
generating genre labels of the training media contents; and
adjusting a parameter of the content understanding model based on the generated genre labels and the labeled genre labels.

Example 8. The method of any of Examples 1-7, further including:
training the content understanding model based on a plurality pairs of media contents classified into a positive sample combination and a negative sample combination, the positive sample combination including a first type of media content related to a user and a second type of media content related to the first type of media content, and the negative sample combination including the second type of media content and other first type of media content which is not related to the second type of media content.

Example 9. The method of any of Examples 1-8, wherein training the content understanding model based on the plurality pairs of media content classified into the positive sample combination and the negative sample combination includes:
inputting the positive sample combination into the content understanding model;
generating feature vector pairs of the positive sample combination;
determining a similarity among the generated feature vector pair of the positive sample combination; and
adjusting a parameter of the content understanding model based on the determined similarity.

Example 10. The method of any one of Examples 1-9, wherein training the content understanding model based on the plurality pairs of media content classified into the positive sample combination and the negative sample combination includes:
inputting the negative sample combination into the content understanding model;
generating feature vector pairs of the negative sample combination;
determining a similarity among the generated feature vector pair of the negative sample combination; and
adjusting a parameter of the content understanding model based on the determined similarity.

Example 11. The method of any of Examples 1-10, where recommending the second type of media content to the user based on the first media feature includes:
in response to the first type of media content being a fragment of the second type of media content, displaying a recommendation icon on a display interface of the first type of media content.

Example 12. The method of any of Examples 1-11, further including:
in response to the first type of media content not being a fragment of the second type of media content and in response to the first type of media content being related to the second type of media content, displaying a recommendation icon on a display interface of the first type of media content.

Example 13. An apparatus for cross-type recommendation, including:

a first type of media content determining module configured to determine a first type of media content interacted with a user;
a first media feature determining module configured to determine a first media feature of the first type of media content; and
a second type of media content recommending module configured to recommend a second type of media content to a user based on the first media feature, wherein the first type of media content and the second type of media content belong to different types of media content and share a same feature space.

Example 14. The apparatus of Example 13, wherein the first type of media content is a video, and the second type of media content is a live stream, and initial features of the first type of media content and the second type of media content are converted into the same feature space by a joint encoder, and the initial features include at least one of a picture feature, a speech recognition feature, or a character recognition feature.

Example 15. The apparatus of Example 13 or 14, wherein the first media feature determination module includes:
a first media feature determining module configured to determine the first media feature of the first type of media content by a content understanding model.

Example 16. The apparatus of Examples 13-15, further including at least one of:
a first content understanding model training module configured to train the content understanding model based on a plurality of first type of media content labeled with video labels;
a second content understanding model training module configured to train the content understanding model based on a plurality of second type of media content labeled with live streaming labels; or
a third content understanding model training module configured to train the content understanding model based on a first type of media content labeled with a video genre label and a second type of media content labeled with a live streaming genre label.

Example 17. The apparatus of Examples 13-16, where the first content understanding model training module includes:
a first type of training media content input module configured to input a first type of training media content labeled with a video label into the content understanding model;
a first type of training media content generation module configured to generate a video label of the first type of training media content; and
a parameter adjustment module of the content understanding model configured to adjust a parameter of the content understanding model based on the generated video label and the labeled video label, adjust the parameter of the content understanding model.

Example 18. The apparatus of Examples 13-17, wherein the second content understanding model training module includes:
a second type of training media content input module configured to input a second type of training media content labeled with a live streaming label into the content understanding model;
a second type of training media content generation module configured to generate a live streaming label of the second type of training media content; and
a parameter adjustment module of the content understanding model configured to adjust a parameter of the content understanding model based on the generated live streaming label and the labeled live streaming label.

Example 19. The apparatus of Examples 13-18, wherein the third content understanding model training module includes:
a third-type training media content input module configured to input a plurality of training media contents labeled with genre labels into the content understanding model;
a third-type training media content generation module configured to generate genre labels of the training media contents; and
a parameter adjustment module of the content understanding model configured to adjust a parameter of the content understanding model based on the generated genre labels and the labeled genre labels.

Example 20. The apparatus of Examples 13-19, further including:
a fourth content understanding model training module configured to train the content understanding model based on a plurality pairs of media contents classified into a positive sample combination and a negative sample combination, the positive sample combination including a first type of media content related to the user and a second type of media content related to the first type of media content, and the negative sample combination including the second type of media content and other first type of media content which is not related to the second type of media content.

Example 21. The apparatus of Examples 13-20, wherein the fourth content understanding model training module includes:
a positive sample combination input module configured to input the positive sample combination into the content understanding model;
a feature vector pair generation module configured to generate feature vector pairs of the positive sample combination;
a similarity determination module configured to calculate a similarity among the generated feature vector pair of the positive sample combination; and
a parameter adjustment module of the content understanding model configured to adjust a parameter of the content understanding model based on the determined similarity.

Example 22. The apparatus of Examples 13-21, wherein the fourth content understanding model training module includes:
a negative sample combination input module configured to input the negative sample combination into the content understanding model;
a feature vector pair generation module configured to generate feature vector pairs of the negative sample combination;
a similarity determination module configured to calculate a similarity among the generated feature vector pair of the negative sample combination; and
a parameter adjustment module of the content understanding model configured to adjust a parameter of the content understanding model based on the determined similarity.

Example 23. The apparatus of Examples 13-22, wherein the second type of media content recommendation module includes:
a first recommendation icon display module configured to: in response to the first type of media content being a fragment of the second type of media content, display a recommendation icon on a display interface of the first type of media content.

Example 24. The apparatus of Examples 13-23, further including:
a second recommendation icon display module configured to train the content understanding model based on a plurality pairs of media contents classified into a positive sample combination and a negative sample combination, the positive sample combination including the first type of media content related to the user and the second type of media content, and the negative sample combination including the second type of media content and a further first type of media content.

Example 25. An electronic device, including:
a processor; and
a memory coupled to the processor, the memory having instructions stored thereon, the instructions, when executed by the processor, causing the electronic device to perform acts, the acts including:
determining a first type of media content interacted with a user;
determining a first media feature of the first type of media content; and
recommending a second type of media content to the user based on the first media feature, wherein the first type of media content and the second type of media content belong to different types of media content and share a same feature space.

Example 26. The electronic device of Example 25, wherein the first type of media content is a video, and the second type of media content is a live streaming, and initial features of the first type of media content and the second type of media content are converted into the same feature space by a joint encoder, and the initial features include at least one of a picture feature, a speech recognition feature, or a character recognition feature.

Example 27. The electronic device of Example 25 or 26, where determining the first media feature of the first type of media content includes:
determining the first media feature of the first type of media content by a content understanding model.

Example 28. The electronic device of Examples 25-27, the acts further including at least one of:
training the content understanding model based on a plurality of first type of media contents labeled with video labels;
training the content understanding model based on a plurality of second type of media contents labeled with live streaming labels; or
training the content understanding model based on a first type of media content labeled with a video genre label and a second type of media content labeled with a live streaming genre label.

Example 29. The electronic device of Examples 25-28, wherein training the content understanding model based on the plurality of first type of media content labeled with the video labels includes:
inputting a first type of training media content labeled with a video label into the content understanding model;
generating a video label of the first type of training media content; and
adjusting a parameter of the content understanding model based on the generated video label and the labeled video label.

Example 30. The electronic device of Examples 25-29, wherein training the content understanding model based on the plurality of second type of media content labeled with the live streaming labels includes:
inputting a second type of training media content labeled with a live streaming label into the content understanding model;
generating a live streaming label of the second type of training media content; and
adjusting a parameter of the content understanding model based on the generated live streaming label and the labeled live streaming label.

Example 31. The electronic device of Examples 25-30, wherein training the content understanding model based on the first type of media content labeled with the video genre label and the second type of media content labeled with the live streaming genre label includes:
inputting a plurality of training media content labeled with genre labels into the content understanding model;
generating genre labels of the training media content; and
adjusting a parameter of the content understanding model based on the generated genre labels and the labeled genre labels.

Example 32. The electronic device of Examples 25-29, the acts further including:
training the content understanding model based on a plurality pairs of media content classified into a positive sample combination and a negative sample combination, the positive sample combination including a first type of media content related to a user and a second type of media content related to the first type of media content, and the negative sample combination including the second type of media content and other first type of media content not related to the second type of media content.

Example 33. The electronic device of Examples 25-29, wherein training the content understanding model based on the plurality pairs of media contents classified into the positive sample combination and the negative sample combination includes:
inputting the positive sample combination into the content understanding model;
generating a feature vector pair of the positive sample combination;
determining a similarity between the generated feature vector pair of the positive sample combination; and
adjusting a parameter of the content understanding model based on the calculated similarity.

Example 34. The electronic device of Examples 25-29, wherein training the content understanding model based on the plurality pairs of media content classified into the positive sample combination and the negative sample combination includes:
inputting the negative sample combination into the content understanding model;
generating a feature vector pair of the negative sample combination;
determining a similarity among the generated feature vector pair of the negative sample combination; and
adjusting a parameter of the content understanding model based on the determined similarity.

Example 35. The electronic device of Examples 25-29, wherein recommending the second type of media content to the user based on the first media feature includes:
in response to the first type of media content being a fragment of the second type of media content, displaying a recommendation icon on a display interface of the first type of media content.

Example 36. The electronic device of Examples 25-29, the acts further including:
in response to the first type of media content not being a fragment of the second type of media content and in response to the first type of media content being related to the second type of media content, displaying a recommendation icon on a display interface of the first type of media content.

Example 37. A computer-readable storage medium having computer-executable instructions stored thereon, where the computer-executable instructions are executed by a processor to implement the method of any of Examples 1-12.

Example 38. A computer program product tangibly stored on a computer-readable medium and including computer-executable instructions, the computer-executable instructions, when executed by a device, causing the device to perform the method of any of Examples 1-12.

Although the present disclosure has been described in a language specific to structural features and/or logical actions of the methods, it should be understood that the subject matter defined in the appended claims is not necessarily limited to the specific features or actions described above. On the contrary, the specific features and actions described above are only exemplary forms for implementing the claims.

## Claims

1. A method (200) for cross-type recommendation, comprising:
determining (202) a first type of media content interacted with a user;
determining (204) a first media feature of the first type of media content; and
recommending (206) a second type of media content to the user based on the first media feature, wherein the first type of media content and the second type of media content belong to different types of media content and share a same feature space.

2. The method (200) of claim 1, wherein the first type of media content is a video (102), and the second type of media content is a live streaming (104), and initial features of the first type of media content and the second type of media content are converted into the same feature space by a joint encoder, and the initial features comprise at least one of a picture feature, a speech recognition feature, or a character recognition feature.

3. The method (200) of claim 1, wherein determining the first media feature of the first type of media content comprises:
determining the (420) first media feature of the first type of media content by a content understanding model (420).

4. The method (200) of claim 3, further comprising at least one of:
training the content understanding model (420) based on a plurality of first type of media content labeled with video labels;
training the content understanding model (420) based on a plurality of second type of media content labeled with live streaming labels; or
training the content understanding model (420) based on a first type of media content labeled with a video genre label and a second type of media content labeled with a live streaming genre label.

5. The method (200) of claim 4, wherein training the content understanding model (420) based on the plurality of first type of media content labeled with the video labels comprises:
inputting a first type of training media content labeled with a video label into the content understanding model (420);
generating a video label of the first type of training media content; and
adjusting a parameter of the content understanding model (420) based on the generated video label and the labeled video label.

6. The method (200) of claim 4, wherein training the content understanding model (420) based on the plurality of second type of media content labeled with the live streaming labels comprises:
inputting a second type of training media content labeled with a live streaming label into the content understanding model (420);
generating a live streaming label of the second type of training media content; and
adjusting a parameter of the content understanding model (420) based on the generated live streaming label and the labeled live streaming label.

7. The method (200) of claim 4, wherein training the content understanding model (420) based on the first type of media content labeled with the video genre label and the second type of media content labeled with the live streaming genre label comprises:
inputting a plurality of training media content labeled with genre labels into the content understanding model (420);
generating genre labels of the training media content; and
adjusting a parameter of the content understanding model (420) based on the generated genre labels and the labeled genre labels.

8. The method (200) of claim 4, further comprising:
training the content understanding model (420) based on a plurality pairs of media content classified into a positive sample combination and a negative sample combination, the positive sample combination comprising a first type of media content related to a user and a second type of media content related to the first type of media content, and the negative sample combination comprising the second type of media content and other first type of media content which is not related to the second type of media content.

9. The method (200) of claim 8, wherein training the content understanding model (420) based on the plurality pairs of media content classified into the positive sample combination and the negative sample combination comprises:
inputting the positive sample combination into the content understanding model (420);
generating feature vector pairs of the positive sample combination;
determining a similarity among the generated feature vector pairs of the positive sample combination; and
adjusting a parameter of the content understanding model (420) based on the determined similarity.

10. The method (200) of claim 8, wherein training the content understanding model (420) based on the plurality pairs of media content classified into the positive sample combination and the negative sample combination comprises:
inputting the negative sample combination into the content understanding model(420);
generating feature vector pairs of the negative sample combination;
determining a similarity among the generated feature vector pairs of the negative sample combination; and
adjusting a parameter of the content understanding model (420) based on the determined similarity.

11. The method (200) of claim 1, wherein recommending the second type of media content to the user based on the first media feature comprises:
in response to the first type of media content being a fragment of the second type of media content, displaying a recommendation icon on a display interface of the first type of media content.

12. The method (200) of claim **11,** further comprising:
in response to the first type of media content not being a fragment of the second type of media content and in response to the first type of media content being related to the second type of media content, displaying a recommendation icon on a display interface of the first type of media content.

13. An apparatus (800) for cross-type recommendation, comprising:
a first type of media content determining module (802) configured to determine a first type of media content interacted with a user;
a first media feature determining module (804) configured to determine a first media feature of the first type of media content; and
a second type of media content recommending module (806) configured to recommend a second type of media content to a user based on the first media feature, wherein the first type of media content and the second type of media content belong to different types of media content and share a same feature space.

14. An electronic device (900), comprising:
a processor; and
a memory coupled to the processor, the memory having instructions stored thereon, the instructions, when executed by the processor, causing the electronic device to perform a method of any of claims 1-12.

15. A computer program product comprising computer executable instructions, wherein the computer executable instructions are executed by a processor to implement a method of any of claims 1-12.
